(19) Europäisches Patentamt
European Patent Office
Office européen des brevets

(11) EP 1 037 405 A2

(12) EUROPEAN PATENT APPLICATION

(43) Date of publication:
**20.09.2000 Bulletin 2000/38**

(51) Int. Cl.[7]: **H04B 7/212**

(21) Application number: **00104541.8**

(22) Date of filing: **13.03.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **16.03.1999 US 270338**

(71) Applicant: **TRW Inc.**
**Redondo Beach, California 90278 (US)**

(72) Inventors:
- **Prieto, Jaime L.**
**Torrance, CA 90503 (US)**
- **Wright, David A.**
**Solana Beach, CA 92075 (US)**
- **Wilkinson, Scott L.**
**Manhattan Beach, CA 90266 (US)**

(74) Representative:
**Schmidt, Steffen J., Dipl.-Ing.**
**Wuesthoff & Wuesthoff,**
**Patent- und Rechtsanwälte,**
**Schweigerstrasse 2**
**81541 München (DE)**

(54) **Satellite based demand assigned multiple access protocol for use with a processing satellite communication system**

(57) A method employing a demand assigned multiple access protocol for transmitting data on a processing satellite uplink and downlink in a satellite communications network, where multiple users are assigned to a common data transmission resource as part of a sharing set. A DAMA processor (32) on the satellite maintains a reservation log which identifies the uplink time slots in a non-contentious main flow resource that are currently reserved by the members of the sharing set, and allows the members of the sharing set to reserve the available time slots. To reserve a time slot on the main flow resource for the non-contentious transmission of data, a user of the sharing set will transmit a reservation request to the satellite on a contentious control flow resource (14). If a return message is not received (18), the user knows that the reservation request collided with another reservation request, and a retransmission strategy is employed (20). When the DAMA processor (32) receives the reservation request, it decides whether to grant, deny or delay the request based on predetermined criteria, including whether the requesting user already has a reservation (36), the length of the reservation request (40), the congestion state of the destination downlink port, and other flow control parameters. The DAMA processor (32) will issue a reservation grant message to the requesting user that includes the time, frequency and length to send the data on the main flow. When the requesting user receives the reservation grant message (16), it will then wait for its reserved time slot (22) to transmit the data on the main flow resource (24).

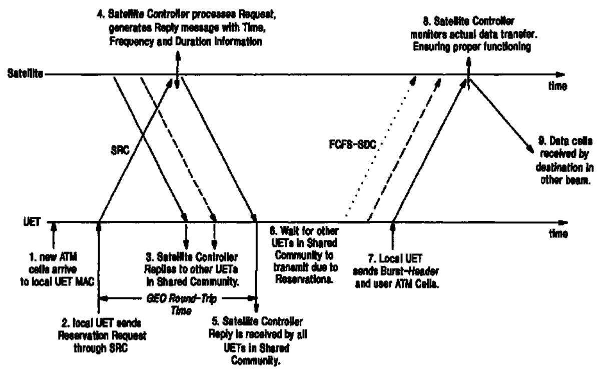


FIG. 1

EP 1 037 405 A2

## Description

BACKGROUND OF THE INVENTION

1. Field of the Invention

This invention relates generally to a demand assigned multiple access protocol for use in a satellite communications system and, more particularly, to an onboard based demand assigned multiple access protocol for use in connection with a processing satellite communications network that allows multiple users to efficiently use a common uplink transmission resource.

2. Discussion of the Related Art

Various communications systems, such as Ka-band satellite processing communications networks, employ processing satellites orbiting the Earth in a geosynchronous orbit. As is known in the art, processing satellites provide the transfer of data between user terminals at ground stations on the Earth. Data is transmitted to the satellite from the user terminals on a satellite uplink. The uplink signals are transmitted on various available channel slots that are separated in frequency and time. Transmission resources (TR) or channels are identified as a series of channel slots available for transmitting data on the transmission uplink path at a certain bandwidth. The data that is transmitted on the channel slots is usually packaged into separate ATM (asynchronous transfer mode) data cells. The ATM cells are demodulated, decoded and switched at the processing satellite, and then transmitted back to the Earth on a satellite downlink to the destination port terminal. A suitable antenna system is provided on the satellite to receive the uplink signals and transmit the downlink signals over a predetermined destination coverage area on the Earth.

A requirement for processing communications satellite networks is the need to regulate access to the satellite for a multitude of bursty users, for example, a set of intra-corporate, inter-site local area network (LAN) interconnections or Web browsing users (which display bursty traffic characteristics), who mutually share the uplink. In other words, a predetermined protocol is required to allow the many users of the network to gain access to the satellite on the uplink without interfering with each other. Typically, a bursty user, such as a user surfing the Web, requires a high peak transmission rate to minimize response time, but at a low average rate, i.e., duty cycle, due to a long idle period between transmissions. An example of this type of bursty transaction is web surfing, where the user "mouse-click's" on a web link, waits impatiently for the network to transfer the page to the local computer (high rate requirement for low delay), and then the user reads and thinks about the web page on the computer screen before going to the next web link (the think-time results in a low average rate). If a dedicated uplink channel was allocated to each user at a peak rate, then the average usage of the channel, i.e., the actual bits which are billable, or the actual usage, i.e., the average rate of the resource, is low because of the low duty cycle.

To solve the above-described problem, demand assigned multiple access (DAMA) protocols have been developed to improve the usage efficiency of the available uplink resources by allowing several users to share the same uplink channel. In other words, to provide a more efficient usage of the available channels, multiple users share the same uplink bandwidth. In general, DAMA protocols involve trading data throughput efficiency against delay, while maintaining a desired quality-of-service (QoS) performance for "best-effort" traffic. One of the first DAMA protocols is generally known as "Slotted Aloha," where the multiple users of the common channel compete for resource usage. In the Slotted Aloha technique over a fully processed satellite, any of the several users of the same channel would transmit data on the uplink whenever they desired. If two or more users of the same resource also transmitted data at the same time, the two uplink signals would collide in the satellite, resulting in garbled data that was unusable onboard the satellite. The transmitting user detects a collision by the absence of an acknowledgment of the uplink transmission on the downlink within a predetermined time, i.e., detected by a timeout. In order to prevent subsequent immediate collisions by the same two users, the delay of the retransmission for each user is randomized. Although the Slotted Aloha method does increase the usage efficiency of the channels by statistically multiplexing the uplink channel, there is a significant potential for collisions when multiple users simultaneously access the uplink, necessitating retransmission and resulting in concomitant delay by all of the users.

To limit the number of collisions, improved DAMA techniques were devised, generally referred to as reservation DAMAs. In a reservation DAMA protocol, the uplink traffic is separated into a main flow channel where coordinated non-contentious access is provided for user data through a reservation procedure, and a control flow channel which uses the contentious Slotted Aloha technique, but only for reservation requests. The reservation procedure works by specifically reserving a particular slot or slots in the uplink channel prior to actually transmitting the desired data. By reserving particular channel slots for transmitting data on the main flow channel, the chance of a collision between users is removed. Collisions are therefore limited to the lower rate control flow channel resulting in a much higher usable throughput for the flow of data. It is necessary that a reservation DAMA system be based on principles of quality and fairness so that all users receive access in accordance with agreed minimum objectives. For a satellite based DAMA, it is desirable that the reservation DAMA protocol be able to coordinate with a satellite switching system, so that it can adapt its criteria for granting reservations to the current loading condition as evidenced, for example, by the length of the queue waiting for reservations.

For processing satellite networks, there can be three general variations of the reservation DAMA technique, depending on where the reservations are controlled. Particularly, the reservations can be controlled at a central terrestrial location, often referred to as a network operations center (NOC), onboard the processing satellite itself, or distributed among the set of users using the same channels. The first approach is usable for bent-pipe and processing satellites, and is currently in use in very small aperture terminal (VSAT) networks. However, this approach has the disadvantages that a heavy processing load to control the DAMA protocol may occur at the NOC, and two trips through the satellite are required for each reservation request, thus resulting in extra delay and increased overhead usage of the channel that is wasted bandwidth because it is not "billable." A system for accomplishing the second approach is discussed in U.S. Patent Application Serial No. 09/232,155, filed January 15, 999, titled "Onboard Control of Demand Assigned Multiple Access Protocol for Satellite ATM Networks," assigned to the assignee of the instant application. The third approach is the subject of U.S. Patent Application Serial No. 09/162,514, filed September 29, 1998, titled "Distributed Control DAMA Protocol for Use With A Processing Communications Satellite," also assigned to the assignee of the instant application.

It would be desirable to have an onboard based DAMA protocol that allows multiple bursty users to efficiently use a common uplink channel in an efficient manner that avoids collision between sharing users and conserves system resources. It is therefore an object of the present invention to provide such a technique.

## SUMMARY OF THE INVENTION

In accordance with the teachings of the present invention, an onboard DAMA protocol is disclosed for use in connection with a processing satellite communications network, where multiple users are assigned to a common uplink channel as part of a sharing set. A DAMA processor on the satellite maintains a reservation log which identifies the uplink time slots in a main flow channel that are currently reserved by the members of the sharing set to transmit data, and allows the members of the sharing set to reserve the available time slots. To reserve a time slot in the main flow channel for the non-contentious transmission of data, a user of the sharing set will transmit a reservation request to the satellite on a contentious control flow channel. The reservation request includes the amount of data to be sent. If a return message is not received, the user knows that the reservation request collided with another reservation request, and a retransmission strategy is employed.

When the onboard DAMA processor receives the reservation request, it decides whether to grant, deny or delay the request based on predetermined criteria, including whether the requesting user already has a reservation, the requesting user's recent usage, the reservation backlog for other members, the congestion state of the destination downlink port, and other flow control parameters. If possible, the DAMA processor will issue a reservation grant message to the requesting user that includes the time, frequency and length to send the data on the main flow. When the requesting user receives the reservation grant message, it will then wait for its reserved time slot, and will transmit its data on the main flow channel at that time. If the user needs additional resources to transmit more data than was originally requested, it may "piggyback" a next reservation request on the data transfer if there is room available.

Rules and limitations of a particular sharing set can be identified by the DAMA protocol to provide equity and fairness among the sharing users. For example, a maximum reservation length, a peak cell rate that is the burst rate available to the user during reserved intervals, and a sustained cell rate that is the minimum capacity guaranteed to the user can be employed. Best-effort corrections are assigned an SCR as a guideline for call-admission control (CAC) and scheduling. Further, consideration of the impact of a new user to a sharing set on the existing users can also be identified before allowing access to the sharing set.

Additional objectives, advantages, and features of the present invention will become apparent from the following description and appended claims, taken in conjunction with the accompanying drawings.

## BRIEF DESCRIPTION OF THE DRAWINGS

Figure 1 is a timing diagram showing operation of an onboard DAMA protocol, according to the invention;

Figure 2 is a block flow diagram depicting the activity at a user terminal for the onboard DAMA protocol, according to the invention; and

Figure 3 is a block flow diagram depicting the activity at a satellite for the onboard DAMA protocol, according to the invention.

DETAILED DESCRIPTION OF THE PREFERRED EMBODIMENTS

The following discussion of the preferred embodiments directed to an onboard demand assigned multiple access protocol for a processing communications satellite network is merely exemplary in nature, and is in no way intended to limit the invention or its applications or uses.

The present invention is a reservation DAMA protocol of the type referred to above that allows multiple bursty users of a sharing set to use a common uplink main flow channel for transmitting data in a communications system in a non-contentious manner. A sharing set is the set of users that are currently assigned to the common channel. The DAMA protocol will control reservations for multiple sharing sets each including multiple users. The reservation DAMA protocol of the invention employs the general variation that it is controlled onboard the satellite to regulate the DAMA protocol and the reservations. The common channel typically consists of one or more time slots on one or more frequency channels using the typical time division multiple access (TDMA) and frequency division multiple access (FDMA) methods used by a processing satellite.

The essence of the DAMA protocol of the invention is that a processor on the satellite maintains a reservation log which identifies, for each sharing set, the number of uplink time slots on the main flow channel that are currently reserved by one or more members of the sharing set. From this reservation log, the DAMA processor can deduce the next available uplink time slot (NAUTS) for which the next request for a reservation can be honored. Identifying the NAUTS is important so that the DAMA processor knows when the next channel slot will be available to transmit a reserved data transmission based on existing reservations. Note that the earliest value that the NAUTS may attain, even when there are no reservations outstanding, is the current uplink time slot (CUTS) as seen at the satellite, plus the round trip time $S_{rt}$ from the terminal to the satellite to the terminal since the propagation delays between the satellite and the terminal preclude any earlier assignment.

To initiate a network connection, a prospective user requests the NOC to assign it to a sharing set of a particular class. The connection initiation request also includes the identity of the terminal or set of terminals with which the entering terminal wishes to communicate. A sharing set of a particular class is typified by several parameters, including a peak ATM cell rate (PCR), a sustained ATM cell rate (SCR), and a largest reservation ($S_{max}$). The PCR is the burst rate available to the user during reserved intervals. Typically, the PCR is no less than the transmission rate for a single channel less any portion thereof set aside for the control flow. The PCR may be larger when more than one channel is available for management by the DAMA processor, but may, of course, not exceed the peak uplink rate at which the users terminal can operate. The SCR is the guideline minimum capacity given to the user. The sum over all members of the sharing set of the SCRs cannot exceed the total main flow channel. An SCR is a minimum guarantee and, generally, a user can expect to have a larger throughput than the SCR since, typically, not all of the users of the sharing set will concurrently exercise their guaranteed throughput. The $S_{max}$ is a cap of the number of time slots that a user may request for a single reservation. Note that, for simplicity, the parameters referred to above were described as being identical for all members of the sharing set. While this is true in the case of the PCR, since any terminal is granted full speed access to the main flow channel during a reservation, the SCR and $S_{max}$ parameters may vary on a user-to-user basis so the DAMA protocol of the invention can accommodate variable user parameters within a sharing set.

The NOC performs connection admission control (CAC) to determine whether the session requested by the user may be granted. In performing this function, the NOC has two considerations. The first consideration relates to the impact of the tentative connection on the community of users currently having connections, but not part of the sharing set. If the user is joining a sharing set for which uplink channels and downlink usage have already been allocated, then no further action at this CAC level is required. If the addition of the user creates a need for an additional uplink channel and/or downlink usage, then the NOC will evaluate the CAC issue at that level. The second consideration pertains to whether the prospective new member's presence impacts the sharing set which the user wishes to join. For this consideration, the NOC evaluates the questions: a) is the available main flow capacity no less than the requested PCR?; b) is the sum of the existing SCRs plus the requested SCR within the capacity of the main flow?; and (c) would the guaranteed maximum delay of users which are currently members of the sharing set not be jeopardized by admission of the new user's maximum message size; and (d) is the destination output not congested? If the response is affirmative to each question, then the request may be granted. Otherwise, either the channel capacity assigned to the sharing set must be expanded or the request be denied. Alteratively, the NOC may suggest that the requesting user reapply using different PCR, SCR and $S_{max}$ parameters.

When admission to the sharing set is granted, there exists a "traffic contract." For best-effort connections, the contract is used as a guideline not strictly enforceable. That is, an admitted user is guaranteed access to the uplink at a burnt rate equal to the PCR and with average access rate of at least the SCR. The contract also implies a nominal "worst case delay" ($S_{wcd}$), that is, the maximum number of uplink time slots that a terminal must wait from the time that it bids for a reservation until uplink capacity is available to it. The nominal $S_{wcd}$ is the sum over all users in the sharing set of $S_{max}/N_{chan}$, added to $S_{rt}$, where $N_{chan}$ is the number of frequency channels allocated for the sharing set (main flow) and $S_{rt}$ is the round trip time. The qualifier "nominal" applies because of the possibility of a collision in the control flow, which may introduce additional delay. However, it is unlikely that a user would ever experience a delay even close to $S_{wcd}$ since the probability that all of the users in the sharing set would request the longest burst access concurrently is very small.

The users of a sharing set are presumed to be able to access the main flow and the control flow channels to send and/or receive traffic and to send requests to the DAMA processor, and to observe responses from it. When a user requires access to the satellite, it begins by bidding for a spot on the reserved main flow channel by a reservation query message (RQM). All of the users in a sharing set are free to bid for reserved time slots using the RQMs, which are sent to the satellite addressed to the satellite's DAMA processor in a shared contentious control flow channel. An example of an RQM could consist of one or more ATM cells (a typical system sends four ATM cells at a time in a burst), which uses a VPI/VCI as an ATM address, that targets the satellites DAMA processor and includes, in the body of the cell, the address of the terminal requesting a reservation. Other data units and addressing techniques may be used. Since the RQMs use contentious access, the standard techniques of Slotted Aloha apply, including collision detection and a retransmission strategy. Processing satellites typically use robust error control on their uplink which leads to the discard of all colliding bursts containing RQMs. Although the satellite DAMA processor is explicitly aware of the occurrence of a collision since colliding bursts are discarded prior to the point where cells are released to the DAMA processor, a collision event is implicitly detectible by the user sending the RQM due to the absence of a responsive RGM in the downlink, within an expected time window.

When an RQM arrives at the satellite DAMA processor, the processor considers the request and prepares a response reservation grant message (RGM) or reservation denied message (RDM), which typically also takes the form of one or more ATM cells. The RGM or RDM is addressed by VPI/VCI to the user terminal which originated the causal RQM. The satellite DAMA processor maintains a time offset so that the NAUTS is expressed as the uplink time slot that will apply at the user terminal when a reservation grant message (RGM) arrives in the downlink. This cell (or cells) is inserted in the downlink and appraises the user of the disposition of its RQM. Typically, this takes the form of an RGM of the requested reservation, in which case the terminal is informed of the NAUTS, that is, of the uplink time slot at which it may begin to access the main flow of the uplink, and the reserved interval, in time slots, during which the main flow channel is dedicated to the requested user. For a more advanced variation, the RGM may specify a set of frequency channels that may be concurrently accessed by the requesting terminal in those cases where the terminal has multichannel uplinking capability and where the channel for the sharing set includes more than one channel in the main flow.

In a variation of the method where a transmission block contains multiple cells, the burnt bearing an RQM cell may also include the first cells of the data transfer to which the reservation request pertains, a technique known as "piggy-backing" of the main flow channel on the control flow channel. In the case of extremely short data transfers, these cells may suffice to bear the entire data transfer so that the required main flow reservation is zero. For a typical case, each burst includes four ATM cells so that there is room for up to three data transfer cells in the burst that has the RQM. When this variation is used, the allocated reservation may be reduced to account for the successful transfer. However, an RGM must be sent by the DAMA processor, even in those cases where the users data transfer was fully consummated by such piggy-backing, since otherwise the user has no way of knowing whether its RQM encountered a collision.

In the process of logging and responding to the RQMs, the DAMA processor also updates the NAUTS for the sharing set by the amount of slots in the reservation. When multiple channels are being managed by the DAMA processor, the reservation process become two dimensional and the processor must account for all of the slots reserved on all channels. When no RQM is received by the DAMA processor during a time slot epoch, the NAUTS is either incremented (when it is at its minimum value of CUTS + $S_{rt}$), or left as is when it is greater than the minimum.

The DAMA protocol of the present invention uses two rules to ensure access fairness among the multiple users in the sharing set. One rule, discussed above, is that the size of the reservation request is capped at some maximum length ($S_{max}$) so that a single user may only have access to the main flow channel for some maximum number of slots. The second rule is that each reservation must be fully utilized before the same user is permitted to make a subsequent reservation. Together, these two rules ensure that no user can utilize more than its fair share of the main flow channel, and that the delay to gain access to the channel is bounded. If any of these two criteria are violated by an RQM, then the DAMA processor will send an RDM to the requesting terminal.

A special option exists for the use of the last time slot in a reservation. For some processing satellite systems, some of the payload of this last slot may be unused, for example, when multiple ATM cells are borne in a single burst. In this situation, a user may "piggyback" its next reservation request, if it requires another reservation immediately upon completing its current one, by sending an RQM in the final time slot in the main flow. This piggybacking of the main flow channel is distinct from the converse case mentioned above. This approach ensures that the RQM will not experience a collision and offloads the control flow channel, thereby reducing the opportunity for collisions for other users. Except in this special situation, RQMs must be sent in the control flow channel.

Figure 1 shows a timeline for both satellite time and user Earth terminal (UET) time to depict the operation of the DAMA protocol of the invention discussed above. Data in the form of ATM cells are sent to a media access controller (MAC) in the UET to be transmitted on the satellite uplink at some future time, as indicated by time 1 on the UET timeline. At this time, it is assumed that the UET has been admitted to a sharing set in the network, the NOC has assigned it to a shared reservation channel (SRC), and an ATM connection has been established between the source and the destination terminals. The SRC is the contentious control flow channel that all of the users of the sharing set transmit reservation requests. Sometime later, the UET sends an RQM on the SRC, using, for example, a Slotted Aloha protocol. The RQM will include information of the number of ATM cells to be transmitted, or the number of channel slots needed for the reservation. While the UET is waiting for the return RGM, it may be receiving other RGMs transmitted by the satellite on the downlink to other UETs in the sharing set, as indicated by time 3.

At time 4, the satellite receives the RQM from the UET and then processes the reservation request. The DAMA processor queues the requests, sorts them based on their service time, and replies to the UET based on currently available network status information. The reply may be the RGM giving the time, frequency and duration of the reserved transmission time, or instructions to wait a specific amount of time due to the onset of congestion at the destination port, or a refusal due to congestion. There is a processing delay in the satellite because of satellite processing between the time the satellite receives the RQM and transmits the RGM (or RDM). At time 5, the RGM (or RDM) is received by the UET, as well as all of the other UETs in the sharing set. If the UET does not receive a response within a predetermined time period, it will know that its RQM collided with another RQM from another UET in the sharing set, and after a randomized delay, will retransmit the same RQM.

After receiving an RGM the UET will wait the predetermined time to transmit the data based on the information received in the RQM. In the meantime, other UETs in the sharing set will be transmitting their data on their reserved channels, as indicated at time 6. When the NAUTS for the UET arrives, the UET will transmit its ATM cells to the satellite over the main flow channel, such as a first-come first-served shared data channel (FCFS-SDC), as indicated by time 7. The first cell (burst header) in the data burst transmission is a status message from the UET to the satellite DAMA processor describing the assumed characteristics of the current data transfer (i.e., state of the UET), including start-time, frequency, duration, rate or amount of data transfer. It should be noted that if the local UET requires a larger reservation than was originally requested, it may piggyback a request message to the DAMA processor as part of the data stream that has already been allocated. In other words, instead of sending a new RQM in the contentions control flow, the UET may transmit the RQM as part of the reserved data transfer. Sometime later, the DAMA processor will receive the ATM cells from the UET, and will monitor actual data transfer, insuring proper functioning, as indicated by time 8. This stage of the protocol is for fault detection, isolation and recovery, enabling the DAMA processor to shut down a malfunctioning UET. The satellite will switch the data cells to the particular destination downlink for transmission of the data back to the Earth to be received by the destination UETs, as indicated by time 9.

The method described above of the invention avoids the disadvantages of the NOC based DAMA protocol, and has simpler and more robust synchronization of the reservations than is the case when the DAMA control is distributed amongst the members of the sharing set. An advantage over the distributed case is that, since all reservations over all of the sharing sets are known at a single location, i.e., the DAMA processor on the satellite, the combined resources of all sharing sets (within the same QoS criteria and with the same channel speeds) can be made available collectively. This allows exploiting a statistical phenomenon that takes advantage of economies of scale so that larger sets sharing a proportionately larger resource typically experience less delay in gaining access to the bandwidth resource. Further, it has the advantages over the distributed case that it can enforce rules and can do so dynamically based on the current traffic flow and buffer utilization on the satellite to effect flow control. Further advantages are identified as follows:

1. Efficient usage of the uplinks by a set of bursty users.

2. Single hop delay for non-colliding reservation requests.

3. Piggybacking reduces contention in the control flow channel.

4. Piggybacking improves efficiency of the data transfer.

5. No synchronization of the DAMA process required at the terminals.

6. Only simple processing required on the ground.

7. Simple connection admission control for entry to the sharing set.

8. Permits sharing sets to be merged into a large, statistically efficient, group.

9. Can provide sharing over a set of many individual channels.

10. Provides well defined Quality of Service (QoS).

11. Well adapted to be used with ATM protocols.

12. Provisions for flow control and congestion control may be included.

While it has the same latency and efficiency attributes as the distributed case, the subject innovation has a drawback that it requires the provision of facilities in space to control the DAMA reservation activity.

Figure 2 is a flow block diagram 10 depicting the activity of the reservation request DAMA protocol of the invention at the UET. When the UET joins the sharing set it goes into a quiescing state at box 12 where it waits for a data transfer request from the connected user terminal. When such a request occurs, such as a mouse click during web surfing, the terminal sends the RQM, including the reservation length and other ATM data, to the satellite at box 14. Data may be piggybacked on the RQM in accordance with the discussion above. The UET then waits for a response from the satellite at box 16. If the UET receives an RDM, or the RGM times out, the terminal waits for a random delay at box 18, and then resends the RQM at box 20. The terminal again waits for a response at box 16. This process of resending the RQM may be repeated.

When the terminal receives the RGM in the satellite downlink, it will wait until the CUTS = NAUTS at box 22 for its reservation slot to send the data to the satellite. When CUTS = NAUTS, the terminal will transmit the data on the main flow channel at box 24, and will continue to send bursts of data until the reservation request is completed. If the terminal sends its last burst of data at box 26, it will then return to the quiesce box 12 to wait for another data transfer request. If the terminal piggybacks an RQM on a burst of data at box 28, it will return to wait for the RGM at box 16.

Figure 3 shows a flow block diagram 32 of the DAMA protocol at the satellite. At the end of each channel slot in the shared reservation channel indicated at box 34, the DAMA processor determines whether an RQM is pending at decision diamond 36. If no RQM is in the current flow channel time slot, then the processor updates the NAUTS at box 38 and then waits for the current channel slot to time out at box 40. If there is an RQM pending, then the DAMA processor gets the user parameters from a data base at box 44. The DAMA processor then determines if the requesting user has a current reservation at decision diamond 46. If the requesting user does have a current reservation to send data in the future, the DAMA processor will deny the most recent reservation request and send an RDM in the downlink at box 48. If the requesting user does not have a current reservation request, the DAMA processor will determine if the current reservation request exceeds the maximum reservation length $S_{max}$ for that sharing set at box 50. If the reservation request does exceed the maximum reservation length $S_{max}$, the DAMA processor will reduce the requested reservation length to $S_{max}$ at box 52. If the reservation request is set to $S_{max}$ or does not exceed $S_{max}$, then the processor determines whether the destination port identified in the address of the RQM is in a state of congestion at decision diamond 54. The processor receives destination port queue size information, and determines whether based on this information the destination port is congested, and cannot receive additional data, at box 56. This congestion information is transferred to the decision diamond 54. If the destination port is in a state of congestion, then the processor denies the reservation request and transmits the RDM in the downlink at box 48. If the destination port is not congested, the processor sets the channel slots for the reservation request at box 58 and sends this information to update the user data base at box 60, along with additional membership change set messages to the sharing from the NOC. The processor then transmits the RGM in the downlink at box 62, updates the NAUTS at box 38, and waits for the next channel slot at box 40.

For a specific example of the above-described DAMA protocol, assume the following uplink parameters for a processing satellite. A single channel peak rate of 384kb/s, organized as 24 * 16 kb/s through use of a 24 slot TDMA frame with a period of 96 ms (each time slot is 4 ms) and with each slot having a burst of 192 bytes in four cells, each of 48 bytes. Two channels are allocated to the sharing set. One of the channels is used exclusively for the contentious control flow, that is for bursts including RQMs and piggybacking traffic. The second channel is used exclusively for data transfer on the coordinated main flow resource and may only be accessed by a user terminal when the terminal has been granted a specific reservation by the satellites DAMA processor. The net flow capacities are, then, 384 kb/s, 48 kB/s, 1000 cells/second or 250 bursts per second for both the control and the main flow.

As an example sharing set, consider many web surfers. Each web surfer is assumed to have a mean time between clicks, i.e., a need for a data transfer from the users terminal to a web site, of 50 seconds, and to have an exponential distribution. The probability distribution function for the length of the user's message is assumed to be:

$$P(m) = 1/1200 \text{ for } 100 \le m \le 1000, \text{ and}$$

$$= 1/1200 \text{ for } 1000 \le m \le 4000 \quad \mathbf{1}$$

$$= 0 \text{ otherwise}$$

where m is the message length in bytes. The corresponding number of main flow bursts to transport messages of this size ranges from zero (since piggybacking can take the shortest data transfers entirely in the control flow) to a maximum of 21 bursts. The mean value of m for this distribution is approximately 1038 bytes. Note that this is a hypothetical distribution for this example. Actual empirical results are published from statistical surveys of Internet traffic. However, the assumed distribution is typical to the extent that many click requests involve small messages, as indicated by the high probability, up to 1000 bytes, but may be quite long, occasionally, corresponding to the tail of the distribution. The average data transfer rate per user is then 1038/50 or 20.8 bytes per second (166 bps). Since the unit of uplink transmission is a burnt of four ATM cells (192 bytes) there is some fragmentation in the sense that the final burnt of each data transfer is usually partially empty. When this effect, plus the piggybacking of data in RQM bursts, is included, it turns out that the average number of bursts sent per data transfer event in the main flow is 5.158. With an average click rate of 0.02 accesses per second, the average user demand for the main flow is 0.1032 bursts per second. With perfect sharing, the main flow channel, which has a capacity of 250 bursts per second, could accommodate 2423 users with the assumed characteristics. To provide some slack for statistical fluctuations, this example assumes that the sharing set is limited to 2300 users, by the sharing set CAC, so that the maximum load on the main flow channel is about 95% of capacity.

With 2300 users accessing the control flow with an average event rate of 0.02 accesses per second, corresponding to the 50 second mean time between clicks, the average access rate would be 46 per second. This contrasts with the rate of available slots for bursts bearing RQM cells of 24/0.096 or 250 per second, and represents an average loading in the Slotted Aloha contention channel of 0.184 accesses per opportunity which is sustainable with Slotted Aloha and with low probability of any terminal encountering several consecutive collisions of its RQM. Nevertheless, some of these accesses result in collision, so that multiple RQMs have to be sent in some cases. Allowing for such repeated RQMs, the actual access rate may be calculated from the Slotted Aloha theory to be 0.232. Note that with piggybacking, the three ATM cells accompanying an RQM cell offload approximately 144 bytes of the data transfer from the main flow, so that the effective loading on the main channel has a mean value of 894 bytes per data transfer. This effect was considered in computing the mean number of bursts (5.158) per access of the main flow channel. Since the carriage capacity of 5.158 bursts is 990 bytes, these calculations show that approximately 96 bytes per access are unused. Equivalently, this implies that the final burst of each access is half empty as a result of fragmentation. With 2300 users, each with an average data transfer rate of 166 bits per second, the average useful thruput of the two channels allocated to the DAMA protocol is 381,800 bits per second. The available capacity of the two channels is 2 * 384 or 768 kb/s, for an effective average usage of 49.7%. This figure is considerably higher than the thruput that could be attained with Slotted Aloha alone as a result of the highly efficient loading of the main flow channel by the reservation procedure, which compensates for the less efficient usage that occurs in the contention channel.

The delay characteristics for this example may be estimated based on the typical delay to obtain an RGM and the delay after an RGM is received until the terminal can begin transmission on the main flow channel.

For Slotted Aloha with a load factor of 0.184 (or access rate = 0.232), the probability of collision is also 0.232 so that 76.8% of the RQMs arrive at the DAMA processor without collision on the first attempt. The delay to an RGM for these first time successful users is dominated by their round trip time $S_{rt}$ to the satellite, which is about 70 burst intervals. In the 23.2% of reservation setups that collide on the first attempt, retransmission is required. To avoid a certain repeat of the collision, the terminals wait for some random interval before trying a second retransmission. For this example, it is assumed that this random delay is uniformly distributed between 0 and 60 bursts with a mean value of 30. Thus, in 76.8% of 23.2% or 17.8% of the DAMA reservation request actions, an RQM is returned on the second attempt and with a mean delay of two round trip times plus half the maximum randomization backoff, for a total of 170 time slots (0.68 seconds) in the current example. Continuing the same type of computations, 99% are set up on no more than three tries with an average delay of 1.08 seconds, and so on.

The second component of delay involves queuing for access to the main flow channel, which from the above description is controlled by CAC to a maximum loading of about 95% of capacity. A simulation was set up to model the example case loading of the main flow channel. The model covered one million burst epochs over an hour of real time for the example channel, and exhibited an average load factor of 95%. The median queue delay was 54 bursts and the decades were 183, 370, and 530 time slots, at 10%, 1.0% and 0.1%, respectively. The corresponding delays in time are 0.216, 0.732, 1.480, and 2.120 seconds, for the median and the three decades, respectively.

In the discussion above, it was noted that the maximum reservation size may be capped. For this example, the cap might be set at 10 blocks in the main flow, in which case the probability that a data transfer request exceeds the cap is about 16.1%. In the event of a cap, the terminal can piggyback a second RQM in the final burst of each reservation on the main flow channel so that it does not experience contention more than once for any given data transfer. This feature reduces demand on the contention channel, and therefore delays, but was not included in the example above for conservation. With capping, most users will encounter shorter queues, but the capped user will experience a longer total delay to complete its longer data transfer.

The forgoing discussion discloses and describes merely exemplary embodiments of the present invention. One skilled in the art will readily recognize from such discussion, and from the accompanying drawings and claims, that various changes, modifications and variations can be made therein without departing from the spirit and scope of the invention as defined in the following claims.

## Claims

1. A method employing a demand assigned multiple access protocol for transmitting data on a processing satellite uplink in a satellite communications network, said method comprising the steps of:

   requesting access to a sharing set that includes multiple users;
   sending a reservation request to the satellite on a control flow uplink channel to bid for an available slot to transmit data on a main flow uplink channel;
   processing the reservation request in the satellite to determine whether to grant, deny or delay the reservation request based on predetermined criteria;
   transmitting a reservation grant message on a satellite downlink if the reservation request is granted, said reservation grant message including information of the time, frequency and duration for transmitting the data on the main flow channel; and
   transmitting the data to the satellite on the main flow channel when the time for transmitting the data arrives.

2. The method according to claim 1 wherein the control flow uplink channel is a contentious shared reservation channel and the main flow uplink channel is a non-contentious shared data channel.

3. The method according to claim 1 further comprising the step of determining that the reservation request collided at the satellite with a reservation request from another user of the sharing set if a message is not received from the satellite in the downlink within a predetermined time period.

4. The method according to claim 3 further comprising the steps of randomizing, delaying and resending the reservation request after the timed period has expired.

5. The method according to claim 1 wherein the step of requesting access to a sharing set includes being limited to a predetermined peak cell rate that identifies the burst rate available to the users of the sharing set.

6. The method according to claim 1 wherein the step of requesting access to a sharing set includes being limited to a predetermined sustained cell rate that identifies the minimum reservation capacity guaranteed to the users of the sharing set.

7. The method according to claim 1 further comprising the step of transmitting data in combination with the reservation request on the control flow channel.

8. A method for transmitting data on a processing satellite uplink in a satellite communications network, comprising the steps of:

   sending a reservation request by a requesting user on a control flow channel of the satellite uplink to bid for an available slot to transmit data on a main flow channel;
   processing the reservation request in the satellite to determine whether to grant the reservation request based on predetermined criteria;
   transmitting a reservation message on a satellite downlink to the requesting user of the decision to grant the reservation request, wherein if the reservation message is a reservation grant message, the reservation grant message includes information of the time, frequency and duration for transmitting the data on the transmission resource; and
transmitting the data on the main flow channel when the time for transmitting the data arrives.

**9.** The method according to claim 8 wherein the step of processing the reservation request includes the step of denying the reservation request if the requesting user already has an existing reservation.

**10.** The method according to claim 8 further comprising the step of adding data to the reservation request on the control flow channel.

**11.** A method employing a demand assigned multiple access protocol for transmitting data on a processing satellite uplink in a satellite communications network, said method comprising the steps of:

contacting a network operations center with data transfer requirements as a potential user of one of a plurality of sharing sets where each sharing set includes multiple members using common transmission sources of the satellite uplink, said network operations center assigning the user to the sharing set based on the data transfer requirements;
sending a reservation request to the satellite as a requesting user of a sharing set on a contentious control flow uplink channel to bid for an available slot to transmit data on a non-contentious main flow uplink channel;
determining that the reservation request collided at the satellite with a reservation request from another user of the sharing set if a message is not received from the satellite in a satellite downlink within a predetermined time period;
processing the reservation request in the satellite to determine whether to grant, deny or delay the reservation request based on predetermined criteria, said predetermined criteria including information on the current congestion state of the satellite network and whether the requesting user already has an existing reservation;
transmitting a reservation grant message on the satellite downlink if the reservation request is granted, said reservation grant message including information of the time, frequency and duration for transmitting the data on the main flow channel; and
transmitting the data to the satellite on the main flow channel when the time for transmitting the data arrives.

**12.** The method according to claim 11 wherein the step of gaining access to the sharing set includes being limited to a predetermined peak cell rate that identifies the burst rate available to the users of the sharing set, being limited to a predetermined sustained cell rate that identifies the minimum reservation capacity guaranteed to the users of the sharing set, and being limited to a predetermined maximum data length per reservation.

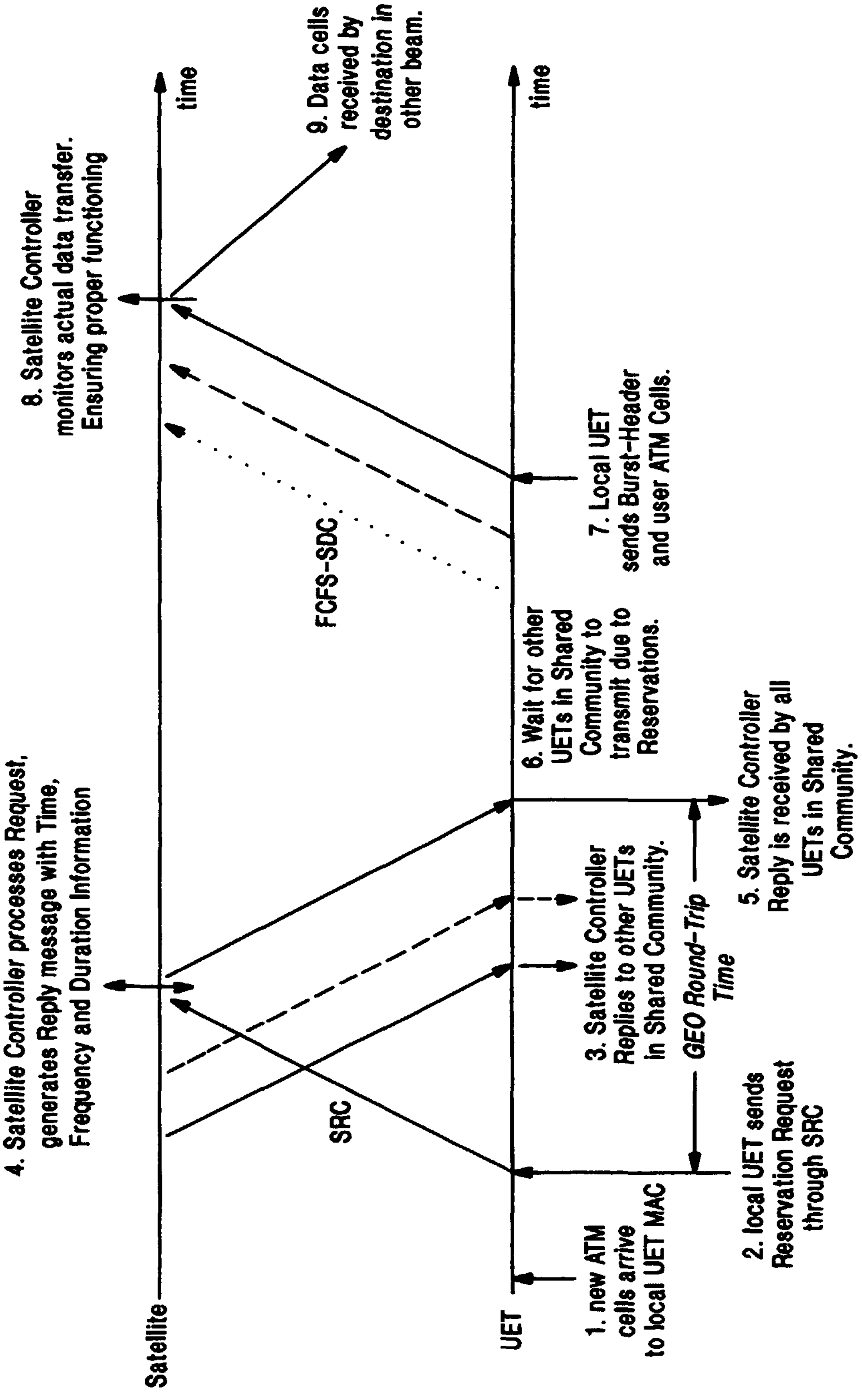
Satellite
UET
time
time
1. new ATM cells arrive to local UET MAC
2. local UET sends Reservation Request through SRC
SRC
GEO Round-Trip Time
3. Satellite Controller Replies to other UETs in Shared Community.
4. Satellite Controller processes Request, generates Reply message with Time, Frequency and Duration Information
5. Satellite Controller Reply is received by all UETs in Shared Community.
6. Wait for other UETs in Shared Community to transmit due to Reservations.
FCFS-SDC
7. Local UET sends Burst-Header and user ATM Cells.
8. Satellite Controller monitors actual data transfer. Ensuring proper functioning
9. Data cells received by destination in other beam.

FIG. 1

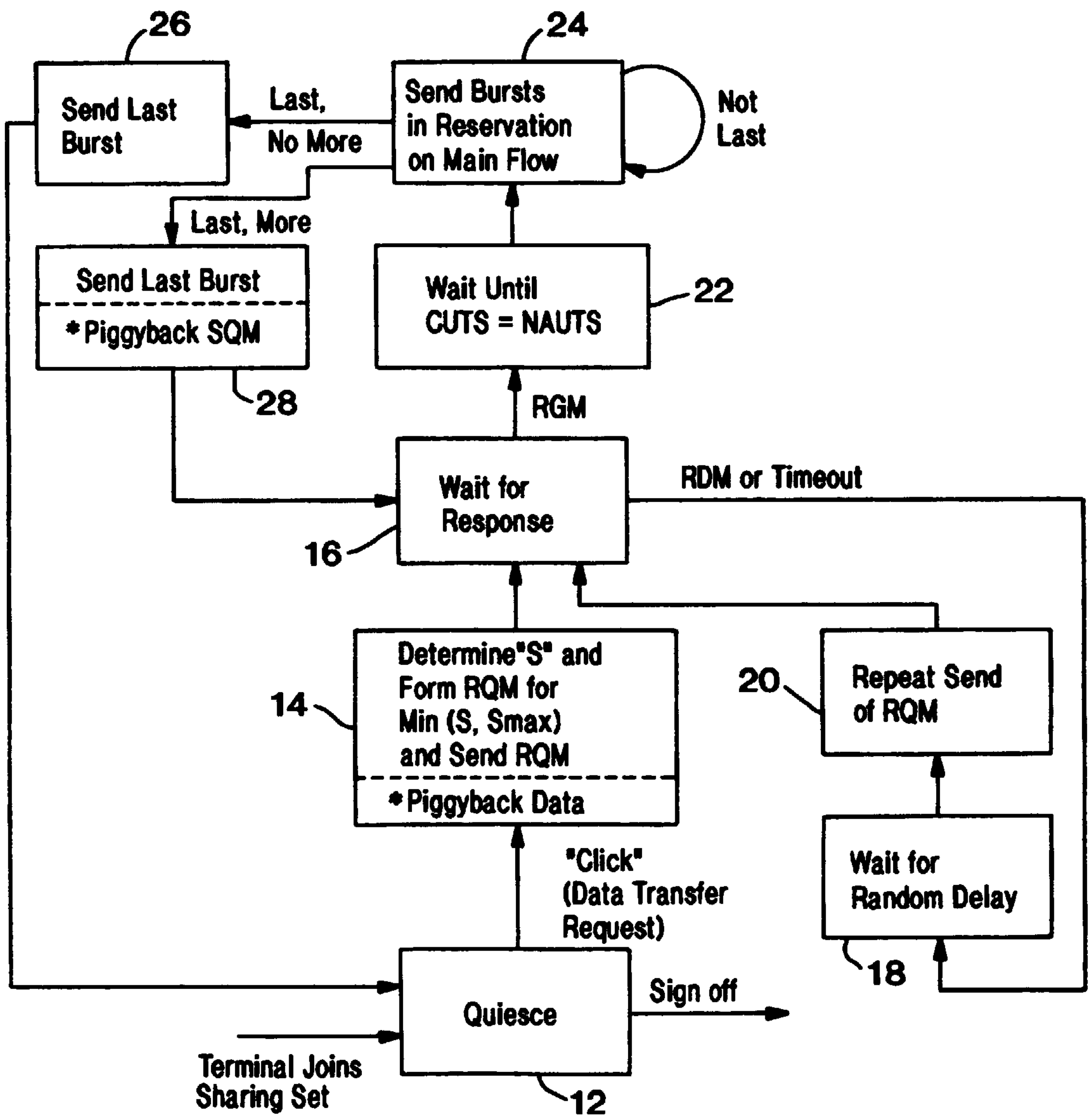
26
Send Last Burst
Last, No More
24
Send Bursts in Reservation on Main Flow
Not Last
Last, More
Send Last Burst
* Piggyback SQM
28
Wait Until CUTS = NAUTS
22
RGM
Wait for Response
RDM or Timeout
16
Determine "S" and Form RQM for Min (S, Smax) and Send RQM
* Piggyback Data
14
20
Repeat Send of RQM
"Click" (Data Transfer Request)
Wait for Random Delay
18
Quiesce
Sign off
Terminal Joins Sharing Set
12

FIG. 2

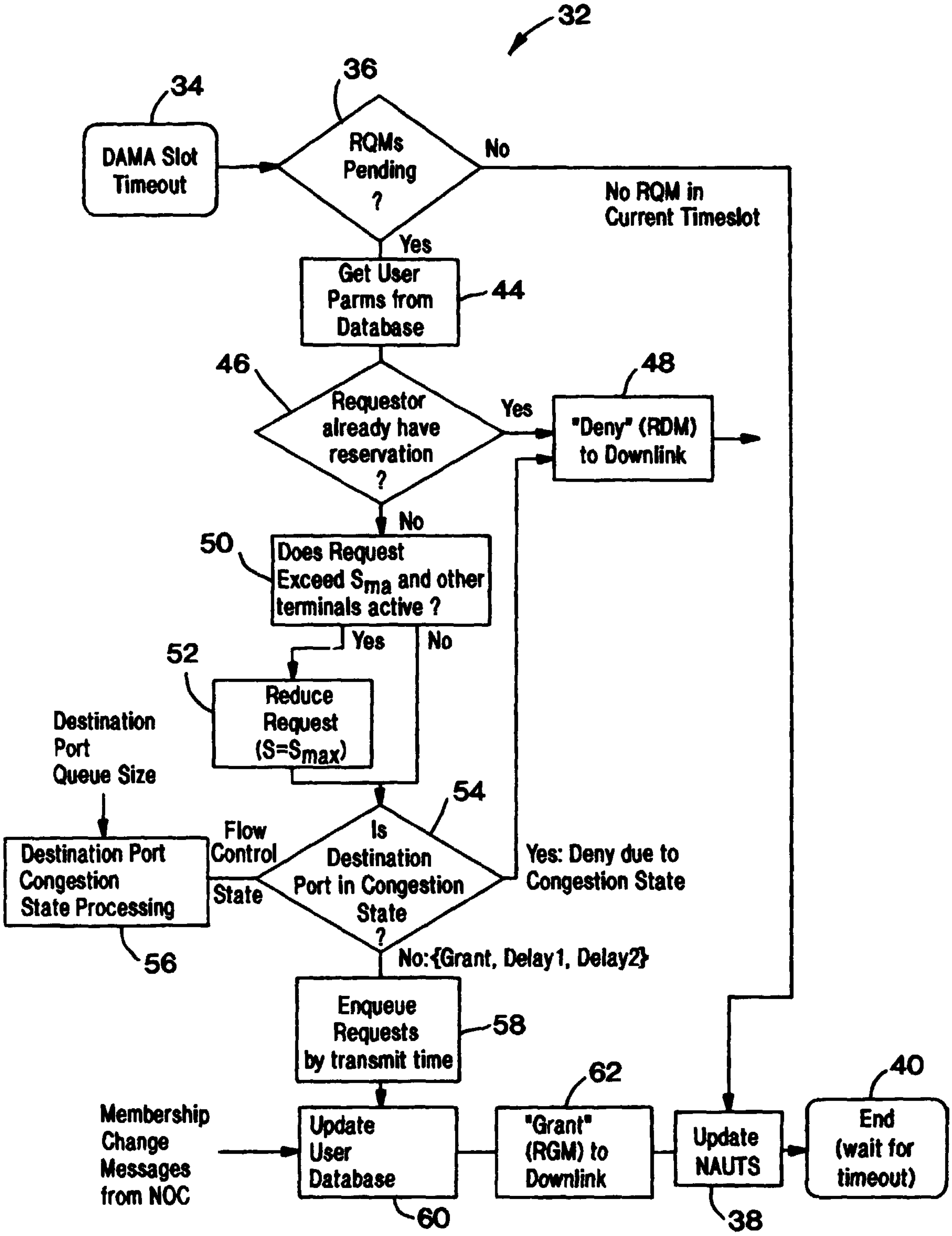
32
34
DAMA Slot Timeout
36
RQMs Pending ?
No
No RQM in Current Timeslot
Yes
Get User Parms from Database
44
46
Requestor already have reservation ?
Yes
48
"Deny" (RDM) to Downlink
No
50
Does Request Exceed $S_{ma}$ and other terminals active ?
Yes
No
52
Reduce Request ($S=S_{max}$)
Destination Port Queue Size
54
Destination Port Congestion State Processing
Flow Control State
Is Destination Port in Congestion State ?
Yes: Deny due to Congestion State
56
No:{Grant, Delay1, Delay2}
Enqueue Requests by transmit time
58
62
40
Membership Change Messages from NOC
Update User Database
"Grant" (RGM) to Downlink
Update NAUTS
End (wait for timeout)
60
38

FIG. 3